(19) Europäisches Patentamt
European Patent Office
Office européen des brevets

(11) **EP 2 480 706 B1**

(12) **FASCICULE DE BREVET EUROPEEN**

(45) Date de publication et mention de la délivrance du brevet:
**28.01.2015 Bulletin 2015/05**

(21) Numéro de dépôt: **10773645.6**

(22) Date de dépôt: **20.09.2010**

(51) Int Cl.:
*C25D 5/54* $^{(2006.01)}$          *C25D 5/34* $^{(2006.01)}$
*C23C 18/16* $^{(2006.01)}$          *C23C 18/44* $^{(2006.01)}$
*H01M 4/88* $^{(2006.01)}$          *H01M 8/02* $^{(2006.01)}$
*H01M 8/10* $^{(2006.01)}$          *C23C 28/02* $^{(2006.01)}$
*C25D 3/50* $^{(2006.01)}$

(86) Numéro de dépôt international:
**PCT/FR2010/000632**

(87) Numéro de publication internationale:
**WO 2011/033196 (24.03.2011 Gazette 2011/12)**

(54) **PROCÉDÉ DE DÉPÔT D'UN MÉTAL SUR UNE COUCHE EN CARBONE POREUX**

VERFAHREN ZUR BESCHICHTUNG EINES METALS AUF EINE PORÖSE KOHLENSTOFFSCHICHT

DEPOSITION PROCESS OF A METAL ON A POROUS CARBON LAYER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **21.09.2009 FR 0904494**

(43) Date de publication de la demande:
**01.08.2012 Bulletin 2012/31**

(73) Titulaire: **Commissariat à l'Énergie Atomique et aux Énergies Alternatives
75015 Paris (FR)**

(72) Inventeurs:
• **FOUDA-ONANA, Frédéric**
  **F-97160 Le Moule (FR)**
• **GUILLET, Nicolas**
  **F-26300 Chatuzange le Goubet (FR)**

(74) Mandataire: **Reboussin, Yohann Mickaël Noël et al
Cabinet Orès
36, rue de St Pétersbourg
75008 Paris (FR)**

(56) Documents cités:
**WO-A2-2004/095614          US-A1- 2006 083 852
US-B1- 6 258 239**

**Description**

L'invention se rapporte à un procédé de dépôt d'un métal M1 sur une couche de carbone, ainsi qu'à un procédé de fabrication d'une électrode pour piles à combustible et à un procédé de fabrication d'une pile à combustible comprenant ce procédé de dépôt.

Les piles à combustible (PAC) sont des systèmes qui convertissent l'énergie calorifique du combustible, généralement l'hydrogène ou un alcool, en énergie électrique par le biais de deux réactions électrochimiques.

L'une de ces réactions est la réaction d'oxydation du combustible ($H_2$ ou des alcools) à l'anode qui génère des électrons par la réaction suivante :

$$H_2 \rightarrow 2\ (H^+ + e^-).$$

L'autre réaction est la réaction de réduction du comburant, $O_2$ pur ou l'air, qui se produit à la cathode et qui génère de l'eau par la réaction suivante :

$$\tfrac{1}{2}\ O_2 + 2(H^+ + e^-) \rightarrow H_2O.$$

Cette réaction est une réaction catalysée, en général par le platine qui est déposé sur l'électrode, formant ce qu'on appelle une couche active.

Ainsi, les piles à combustible ne peuvent fonctionner que si les charges ioniques et électriques sont transportées jusqu'à la cathode.

Le transfert des charges protoniques formées à l'anode est assuré en général par une membrane composée d'un polymère échangeur de protons, par exemple en Nafion® qui est un copolymère à base de tétrafluoroéthylène et d'un co-monomère perfluorosulfoné.

Dans le cas du Nafion®, ce transfert est assuré grâce à ses chaînes sulfonées.

La conduction des électrons se fait, elle, par des fils électriques et pennet d'acheminer les électrons jusqu'à la cathode.

Le travail effectué par le déplacement de ces électrons fournit l'énergie nécessaire pour le fonctionnement, par exemple, d'un appareil électrique.

Néanmoins, la faible cinétique de la réaction de réduction de l'oxygène (RRO), qui se produit à la cathode, conduit à charger les électrodes avec une forte teneur en catalyseur, qui est généralement du platine. Cette teneur en platine est de l'ordre de 0,6 à 0,8 mg/cm$^2$.

Ces chargements élevés augmentent significativement le coût des piles à combustible et rendent ces piles moins compétitives face à des systèmes thermiques classiques en particulier pour des applications dans l'automobile.

De plus, les méthodes conventionnelles de préparation des électrodes ont l'inconvénient majeur d'avoir un taux d'utilisation du platine faible. Cela signifie que la distribution aléatoire des particules de platine dans la couche active ne permet pas d'optimiser la surface réactionnelle pour la réaction de réduction de l'oxygène se produisant à la cathode.

Cela signifie, *a contrario,* qu'une distribution « nano-organisée » devrait permettre de réduire le chargement en platine à environ 0,15 à 0,2 mg/cm$^2$ en conservant des performances catalytiques élevées, par exemple pour une application aux automobiles.

Comme indiqué dans l'équation cathodique de la RRO, le taux d'utilisation du platine est maximum si l'ensemble des sites catalytiques correspond à la rencontre d'un triple contact entre le gaz, les électrons et les protons.

La méthode la plus courante de préparation d'électrode de pile à combustible consiste à imprégner une poudre de carbone avec une solution de sels métalliques puis de réduire les ions métalliques avec des réducteurs tels que le borohydrure de sodium, le formaldéhyde, l'ethylène glycol, etc..., cette solution carbonée étant ensuite filtrée et subissant ensuite un traitement thermique.

La poudre obtenue contient des nanoparticules métalliques (généralement de platine) de tailles comprises entre 2 et 5nm. Cette poudre catalytique ainsi obtenue est mélangée avec de l'eau, de l'isopropanol et une solution du polymère échangeur de protons, par exemple en Nafion®, et devient une encre qui est appliquée sur une couche de diffusion pour devenir une électrode à diffusion de gaz. Ces électrodes préparées (une pour l'anode et une pour la cathode) sont assemblées de part et d'autre d'une membrane composée d'une solution polymère échangeuse de protons, par exemple en Nafion®, et pressées à chaud pour obtenir un assemblage membrane électrode (AME).

Ces électrodes ont des couches actives d'une épaisseur de 50 μm alors que seuls les premiers micromètres proches de la membrane composée d'un polymère échangeur de protons, par exemple en Nafion®, participent activement aux réactions électrochimiques.

Pour remédier à ce problème, on a proposé d'utiliser une méthode de dépôt électrochimique qui permet de concentrer la couche active dans les premiers micromètres de la couche de diffusion, et d'éviter de disperser des particules catalytiques dans le volume de l'électrode plutôt qu'en surface.

On a également proposé d'utiliser des techniques de dépôt telles que le dépôt physique en phase vapeur ou le dépôt chimique en phase vapeur ou encore le dépôt en phase vapeur d'un métal organique pour former la couche active.

Bien que ces techniques aient montré leur utilité pour des petits systèmes, ils sont peu envisageables pour de plus gros systèmes en raison de la lourdeur des moyens expérimentaux à mettre en oeuvre et du coût lié à ces procédés.

Ainsi, la technique du dépôt électrochimique est un procédé économiquement viable et simple à mettre en oeuvre qui permet de réduire le chargement en platine des électrodes de PAC.

Cependant, en terme de localisation, cette technique, bien qu'elle permette de s'assurer que le catalyseur se trouve à des régions accessibles aux électrons, ne permet pas de s'assurer que le catalyseur est accessible au gaz et aux protons.

L'invention vise à pallier les inconvénients des techniques de l'art antérieur en proposant un procédé de dépôt d'un métal M1, en particulier d'un catalyseur, et plus particulièrement du platine, sur une couche de carbone poreux, qui permet la localisation des particules de métal M1 à des régions accessibles non seulement aux électrons mais également aux gaz.

A cet effet, l'invention propose un procédé de dépôt d'un métal M1 sur une couche en carbone poreux comprenant une étape de dépôt dudit métal M1 par réduction électrochimique d'une solution électrolytique d'un sel du métal M1, caractérisé en ce qu'il comprend, avant ladite étape de dépôt du métal M1 par réduction électrochimique, une étape de dépôt d'un métal M2 par réduction chimique par un gaz réducteur d'un sel du métal M2, le potentiel thermodynamique d'équilibre entre la forme ionique du sel de M2 et M2, $E^{eq}_{forme\ ionique\ du\ sel\ de\ M\,2\,/\,M\,2}$ étant supérieur au potentiel thermodynamique d'équilibre entre la forme ionique du sel de M1 et M1, $E^{eq}_{forme\ ionique\ du\ sel\ de\ M\,1\,/\,M\,1}$.

Dans un premier mode de mise en oeuvre du procédé de l'invention, le gaz réducteur est l'hydrogène $H_2$ ou CO, pouvant être associé à un gaz porteur comme $N_2$ ou Ar.

Dans un second mode de mise en oeuvre du procédé de l'invention, le gaz réducteur est un mélange $H_2$ + CO, pouvant être associé à un gaz porteur comme $N_2$ ou Ar.

Dans tous les cas, de préférence, le métal M1 est le platine (Pt).

Dans ce cas, de préférence, le métal M2 est le palladium (Pd).

L'invention propose également un procédé de fabrication d'une électrode de pile à combustible caractérisé en ce qu'il comprend une étape de dépôt d'un métal M1 sur une couche en carbone poreux selon le procédé de l'invention.

L'invention propose encore un procédé de fabrication d'une pile à combustible caractérisé en ce qu'il comprend une étape de fabrication d'une électrode selon le procédé de l'invention.

L'invention propose enfin un procédé de fabrication d'une pile à combustible caractérisé en ce qu'il comprend une étape de dépôt d'un métal M1 sur une couche de carbone poreux selon le procédé de l'invention.

L'invention sera mieux comprise et d'autres caractéristiques et avantages de celle-ci apparaîtront plus clairement à la lecture de la description explicative qui suit.

Le procédé de dépôt d'un métal de l'invention est un procédé de dépôt d'un métal M1 sur une couche de carbone poreux qui comprend une étape de balayage d'un gaz pour déposer les grains de métal M1. En effet, si les grains sont déposés par un flux gazeux alors ils seront nécessairement localisés à des endroits accessibles au gaz. Mais comme un dépôt complet ne peut être envisagé par cette technique, en raison de la lourdeur des appareils à mettre en oeuvre et des coûts liés à ces procédés, l'invention propose de fabriquer, d'abord, des germes en nanoparticules de métal, M2, si possible présentant également une activité catalytique, puis de procéder au dépôt du métal M1 lui-même par la technique classique de dépôt électrochimique du métal M1.

Autrement dit, le procédé de dépôt de métal M1 sur une couche en carbone poreux selon l'invention est caractérisé par, tout d'abord, le dépôt, par une réaction chimique entre un gaz réducteur et une solution d'un métal M2, différent du métal M1, puis le dépôt par une réaction de réduction électrochimique des ions du métal M1 voulu.

La présence des germes métalliques formés lors de la réduction chimique par le gaz réducteur assure que les sites où sont formés ces germes sont accessibles aux gaz. Puis en procédant à une réduction électrochimique en choisissant un courant faible ou un potentiel faible, les germes deviennent des sites actifs pour la croissance des particules du métal M1. Cette croissance assure que le métal M1 est présent aux sites accessibles aux électrons et aux gaz.

Dans le cas de la fabrication d'une électrode pour pile à combustible, et lorsque le métal M1 est le platine, deux conditions sur trois sont alors vérifiées au lieu d'une sur trois par la méthode classique de dépôt électrochimique. De plus, le caractère aléatoire de la dispersion des sites actifs par la méthode classique d'imprégnation est surmonté.

De préférence, dans le procédé de l'invention, le gaz réducteur est l'hydrogène ( $H_2$) ou un mélange d'hydrogène et de monoxyde de carbone ($H_2$ + CO).

Il faut, dans tous les cas, que le sel du métal M2 soit apte à être réduit par le gaz réducteur choisi.

Il faut également que le métal M1 se dépose sur les germes de métal M2 et non sur le carbone. Ces deux conditions impliquent qu'une relation doit être vérifiée entre les potentiels d'équilibre du métal M1 et du métal M2.

La première de ces conditions est que le potentiel thermodynamique d'équilibre du couple forme ionique du métal M2/métal M2 soit supérieur au potentiel d'équilibre du couple forme ionique du gaz réducteur/gaz réducteur. La deuxième condition est que le potentiel thermodynamique d'équilibre du couple forme ionique du sel du métal M2/métal

M2, $E^{eq}_{forme\ ionique\ \ du\ sel\ de\ M\ 2\ /\ M\ 2}$ , soit supérieur au potentiel thermodynamique d'équilibre du couple forme ionique du sel du métal M1/métal M1, $E^{eq}_{forme\ ionique\ \ du\ sel\ de\ M\ 1\ /\ M\ 1}$ .

Cette seconde condition permet d'assurer que le métal M1 cristallise sur les germes du métal M2 et non sur le carbone.

Si cette seconde condition est vérifiée, une barrière énergétique appelée surtension est surmontée.

De préférence, dans le procédé de l'invention, le métal M1 est du platine et le métal M2 est du palladium. Dans ce cas le procédé de dépôt de l'invention est un procédé de fabrication d'une électrode pour pile à combustible.

De préférence le gaz réducteur est, dans ce cas, de l'hydrogène ou le CO. Cependant, il peut être également un mélange d'hydrogène et de monoxyde de carbone. En effet, tous ces gaz vérifient bien pour Pt et Pd les relations des potentiels. Ils peuvent être utilisés en mélange avec de l'argon (Ar) ou de l'azote ($N_2$) ou un mélange d'argon et d'azote, comme gaz porteur(s).

Cependant, comme le monoxyde de carbone est connu comme un gaz qui s'absorbe facilement et qui est ainsi considéré comme un poison pour les piles à combustible, il sera préférablement utilisé en petite quantité.

De plus, la présence de monoxyde de carbone dans $H_2$ conduit à des particules métalliques de palladium plus fines que dans le cas où on utilise seulement de l'hydrogène car le monoxyde de carbone permet de limiter la croissance des particules de palladium et ainsi, une meilleure dispersion des germes de Pd, et donc au final des particules de Pt sont obtenues. Par exemple, 0,005% en volume par rapport au volume total $H_2$ + CO, de CO dans $H_2$ permettront d'obtenir des résultats satisfaisants.

De plus, ces gaz actifs peuvent être mélangés à des gaz porteurs par exemple, pour des raisons de stockage ou de transport. On choisira par exemple l'azote ou l'argon.

Dans le cas où le métal M1 est le platine et le métal M2 est le palladium, la première condition imposée sur les potentiels thermodynamiques d'équilibre est vérifiée lorsqu'on utilise comme gaz réducteur l'hydrogène ou un mélange d'hydrogène et de monoxyde de carbone car le potentiel d'équilibre du couple $H^+/H_2$ est de $0V$ et le potentiel d'équilibre du couple $CO_2$/CO est de -0,11V, alors que le potentiel thermodynamique d'équilibre du couple $Pd^{2+}$/Pd est de 0,95 V.

Ainsi, dans le cas où le gaz réducteur choisi pour réduire le sel métallique M2 est l'hydrogène ou un mélange d'hydrogène et de monoxyde de carbone, seuls les métaux ayant des potentiels thermodynamiques d'équilibre positifs peuvent être choisis.

La seconde condition, dans le cas où M2 est le palladium et M1 est le platine, est également vérifiée lorsque le sel de platine utilisé est $H_2PtCl_6$. En effet, le potentiel thermodynamique d'équilibre du couple $PtCl_6^{2-}/Pt$ est de 0,76$V$, c'est à dire inférieur au potentiel d'équilibre du couple $Pd^{2+}$/Pd.

Plus précisément, pour faire croître les germes de platine sur le palladium, c'est-à-dire pour que le platine en solution puisse se cristalliser sur les germes de palladium, il faut franchir une barrière énergétique appelée surtension.

Cette surtension vaut $\eta = E - E^{eq}_{PtCl_6^{2-}/Pt}$ où E est le potentiel d'électrode mesurée et $E^{eq}_{PtCl_6^{2-}/Pt}$ le potentiel thermodynamique d'équilibre du couple $PtCl_6^{2-}/Pt$. Dans le cas d'une réduction, E doit être inférieur à $E^{eq}_{PtCl_6^{2-}/Pt}$ pour qu'il y ait réduction de $PtCl_6^{2-}$ en Pt.

Plus le potentiel d'électrode E imposé est bas plus la réaction est rapide. Mais dans ce cas il y a un risque d'agglomération des particules de platine et de plus, si le potentiel d'électrode est inférieur à $0V$, la réaction prépondérante risque d'être la réduction de $H^+$ en $H_2$.

Plutôt que d'imposer un potentiel, il est également possible d'imposer un courant. En imposant un courant négatif, c'est-à-dire un courant de réduction, on favorise la forme réduite de $PtCl_6^{2-}$. Tout comme dans le cas d'un dépôt contrôlé par le potentiel, des valeurs de courants très négatifs vont conduire à des potentiels bas avec les mêmes inconvénients que ceux mentionnés pour des potentiels négatifs.

La présence de germes de palladium permet de réduire la surtension nécessaire pour favoriser la nucléation et la croissance des particules de platine, qui se fait alors majoritairement sur le palladium car la barrière énergétique y est moins importante que sur le carbone. Puisque le palladium a été formé par contact entre le gaz $H_2$ ou $H_2$+CO, et

l'électrolyte contenant le sel de palladium, la croissance de platine sur ces germes satisfait au contact entre le gaz et les électrons. Ainsi, avec le procédé de dépôt d'un métal M1 sur une couche de carbone poreux selon l'invention, plus particulièrement le procédé de dépôt de platine sur une couche de carbone poreux, selon l'invention, le coût des piles à combustible comprenant des électrodes obtenues en utilisant le procédé de dépôt de l'invention, est réduit car le platine est localisé à des sites très actifs de l'électrode. On rappellera ici que par site actif on entend des sites où le catalyseur est à la fois en contact avec les protons (H⁺), les électrons et les gaz (O₂).

En résumé, que ce soit pour des alliages bi métalliques ou des catalyseurs de platine, le procédé de dépôt d'un métal M1 sur une couche de carbone poreux selon l'invention consiste à réduire un sel d'un métal M2 avec un gaz réducteur, de préférence l'hydrogène, ou un mélange d'hydrogène et de monoxyde de carbone. On rappellera que l'avantage de l'utilisation d'un mélange hydrogène+monoxyde de carbone par rapport à de l'hydrogène pur réside dans la faculté du monoxyde de carbone à s'absorber sur le platine ou le palladium et donc à contrôler la croissance des particules de palladium. Par conséquent, la réduction chimique avec le monoxyde de carbone permet d'obtenir une meilleure dispersion des germes de palladium et donc des particules de palladium plus petites. La seconde étape du procédé de l'invention est le dépôt électrochimique à potentiel ou à courant pulsé du catalyseur, ici le platine.

Afin de s'assurer que le platine se réduise majoritairement sur les germes de palladium plutôt que sur le carbone, le signal appliqué est à faible courant ou à faible surtension. Dans ces deux cas, les faibles surtensions engendrées par ces signaux forcent le dépôt électrochimique sur les sites de moins fortes résistance, c'est-à-dire sur les germes de palladium plutôt que sur le carbone pour lequel de plus grandes surtensions sont nécessaires.

Afin de mieux faire comprendre l'invention, on va en décrire, à titre d'exemple purement illustratif et non limitatif un exemple de mise en oeuvre.

**Exemple 1 :** Fabrication d'une demi-pile à combustible.

Une couche de diffusion commerciale GDL (Gas Diffusion Layer) de type Elat LT 1200 de 25cm² est traitée en pulvérisant une encre composée de particules de 10 mg de carbone, de 2 ml d'eau et de 2 ml d'isopropanol et de PdCl₂ 5mM dissout dans H₂SO₄ 0,5M. Cette étape permet d'introduire les germes métalliques de palladium sous forme ionique et de rendre la surface de la couche de diffusion commercial hydrophile, propriété essentielle pour la phase suivante de dépôt électrochimique.

Le choix du palladium est lié au fait que le potentiel d'équilibre Pd²⁺/Pd est positif et donc que les ions palladium sont réduits facilement par H₂ d'un point de vue thermodynamique.

En effet, contrairement à Cu²⁺, le potentiel thermodynamique d'équilibre du couple Pd²⁺/Pd est supérieur au potentiel d'équilibre du couple $PtCl_6^{2-}/Pt$, ce qui fait que l'échange ionique entre les ions platine et palladium ne peut se produire comme c'est le cas entre les ions cuivre et platine.

La couche de diffusion obtenue est placée dans une cellule de dépôt électrochimique. Cette cellule permet d'amener le gaz réducteur à travers la couche de diffusion et par conséquent les nano particules métalliques de palladium sont formés seulement aux zones accessibles au gaz.

Ensuite, la réduction électrochimique est assurée par une solution électrolytique composée de H₂PtCl₆ 2mM diluée dans l'acide sulfurique à 0,5M. Le signal imposé est cyclique, 250 cycles à 200mV/s entre 0,8V et 0,5V / ENH (électrode normale à hydrogène). Dès les premiers cycles de voltammétries cycliques, la courbe caractéristique du platine est observée, montrant ainsi la plus grande facilité à réduire le platine sur les germes de palladium que directement sur la GDL.

L'électrode à diffusion directement obtenue est assemblée avec une membrane composée d'une solution polymère échangeuse de protons, par exemple en Nafion®, NR212 pour obtenir une demie-pile. Cet assemblage est effectué sous faible pression (< à 0,5 MPa), pendant 2min30 à 135°C puis sous une pression de 3,5MPa pendant 3min30 à 135°C. Une électrode commerciale est pressée de la même façon pour obtenir une demie-pile commerciale.

**Revendications**

1. Procédé de dépôt d'un métal M1 sur une couche en carbone poreux comprenant une étape de dépôt dudit métal M1 par réduction électrochimique d'une solution électrolytique d'un sel du métal M1, **caractérisé en ce qu'**il comprend, avant ladite étape de dépôt du métal M1 par réduction électrochimique, une étape de dépôt d'un métal M2 par réduction chimique par un gaz réducteur d'un sel du métal M2, le potentiel thermodynamique d'équilibre entre la forme ionique du sel de M2 et M2, $E_{forme\ ionique\ du\ sel\ de\ M2/M2}^{eq}$ étant supérieur au potentiel thermodynamique d'équilibre entre la forme ionique du sel de M1 et M1,

$$E^{eq}_{forme\ ionique\ du\ sel\ de\ M1/M1}.$$

**2.** Procédé selon la revendication 1 **caractérisé en ce que** le gaz réducteur contient de l'hydrogène $H_2$ ou du monoxyde de carbone CO.

**3.** Procédé selon la revendication 1 **caractérisé en ce que** le gaz réducteur contient $H_2$ + CO.

**4.** Procédé selon la revendication 2 ou 3, **caractérisé en ce que** le gaz réducteur est utilisé en mélange avec un gaz porteur choisi parmi $N_2$ ou Ar ou un mélange de ceux-ci.

**5.** Procédé selon l'une quelconque des revendications 1 à 3 **caractérisé en ce que** le métal M1 est le platine (Pt).

**6.** Procédé selon la revendication 4 **caractérisé en ce que** le métal M2 est le palladium (Pd).

**7.** Procédé de fabrication d'une électrode de pile à combustible **caractérisé en ce qu'**il comprend une étape de dépôt d'un métal M1 sur une couche en carbone poreux selon le procédé selon l'une quelconque des revendications précédentes.

**8.** Procédé de fabrication d'une pile à combustible **caractérisé en ce qu'**il comprend une étape de fabrication d'une électrode selon le procédé de la revendication 7.


**Patentansprüche**

**1.** Verfahren zur Abscheidung eines Metalls M1 auf eine Schicht aus porösem Kohlenstoff, das einen Schritt zur Abscheidung des Metalls M1 durch elektrochemische Reduktion einer Elektrolytlösung eines Salzes des Metalls M1 umfasst,
**dadurch gekennzeichnet, dass** es vor dem Schritt zur Abscheidung des Metalls M1 durch elektrochemische Reduktion einen Schritt zur Abscheidung eines Metalls M2 durch chemische Reduktion eines Salzes des Metalls M2 durch ein reduzierendes Gas umfasst, wobei das thermodynamische Potential des Gleichgewichts zwischen der ionischen Form des Salzes von M2 und M2, $E^{eq}_{ionische\ Form\ des\ Salzes\ von\ M2/M2}$, größer ist als das thermodynamische Potential des Gleichgewichts zwischen der ionischen Form des Salzes von M1 und M1, $E^{eq}_{ionische\ Form\ des\ Salzes\ von\ M1/M1}$.

**2.** Verfahren nach Anspruch 1, **dadurch gekennzeichnet, dass** das reduzierende Gas Wasserstoff $H_2$ oder Kohlenmonoxid CO enthält.

**3.** Verfahren nach Anspruch 1, **dadurch gekennzeichnet, dass** das reduzierende Gas $H_2$ + CO enthält.

**4.** Verfahren nach Anspruch 2 oder 3, **dadurch gekennzeichnet, dass** das reduzierende Gas als Gemisch mit einem Trägergas verwendet wird, das aus $N_2$ oder Ar oder einer Mischung daraus ausgewählt ist.

**5.** Verfahren nach einem der Ansprüche 1 bis 3, **dadurch gekennzeichnet, dass** das Metall M1 Platin (Pt) ist.

**6.** Verfahren nach Anspruch 4, **dadurch gekennzeichnet, dass** das Metall M2 Palladium (Pd) ist.

**7.** Verfahren zur Herstellung einer Elektrode einer Brennstoffzelle, **dadurch gekennzeichnet, dass** es einen Schritt zur Abscheidung eines Metalls M1 auf eine Schicht aus porösem Kohlenstoff gemäß dem Verfahren nach einem der vorhergehenden Ansprüche umfasst.

**8.** Verfahren zur Herstellung einer Brennstoffzelle, **dadurch gekennzeichnet, dass** es einen Schritt zur Herstellung einer Elektrode gemäß dem Verfahren nach Anspruch 7 umfasst.

**Claims**

1.  Method of depositing a metal M1 on a porous carbon layer comprising a step of depositing said metal M1 by electrochemical reduction of an electrolytic solution of a salt of the metal M1, **characterised in that** it includes, before said step of depositing the metal M1 by electrochemical reduction, a step of depositing a metal M2 by chemical reduction by a reducing gas of a salt of the metal M2, the thermodynamic equilibrium potential between the ionic form of the salt of M2 and M2, $E_{ionic}^{eq}$ form of the salt of M2/M2 being greater than the thermodynamic equilibrium potential between the ionic form of the salt of M1 and M1, $E_{ionic}^{eq}$ form of the salt of M1/M1 form of the salt of M1/M1

2.  Method according to claim 1 **characterised in that** the reducing gas contains hydrogen $H_2$ or carbon monoxide CO.

3.  Method according to claim 1 **characterised in that** the reducing gas contains $H_2$ + CO.

4.  Method according to claim 2 or 3, **characterised in that** the reducing gas is mixed with a carrier gas selected from $N_2$ or Ar or a mixture thereof.

5.  Method according to any one of claims 1 to 3 **characterised in that** the metal M1 is platinum (Pt).

6.  Method according to claim 4 **characterised in that** the metal M2 is palladium (Pd).

7.  Method of manufacturing a fuel cell electrode **characterised in that** it includes a step of depositing a metal M1 on a porous carbon layer by the method according to any one of the preceding claims.

8.  Method of manufacturing a fuel cell **characterised in that** it includes a step of manufacturing an electrode by the method according to claim 7.